(19) Europäisches Patentamt
European Patent Office
Office européen des brevets

(11) **EP 1 407 359 B1**

(12) **EUROPEAN PATENT SPECIFICATION**

(45) Date of publication and mention
of the grant of the patent:
**30.09.2009 Bulletin 2009/40**

(51) Int Cl.:
*G06F 11/14* (2006.01)    *G06F 11/34* (2006.01)
*G06F 17/30* (2006.01)

(21) Application number: **02749411.1**

(22) Date of filing: **16.07.2002**

(86) International application number:
**PCT/KR2002/001341**

(87) International publication number:
**WO 2003/009139 (30.01.2003 Gazette 2003/05)**

(54) **PARALLELIZED REDO-ONLY LOGGING AND RECOVERY FOR HIGHLY AVAILABLE MAIN MEMORY DATABASE SYSTEMS**

PARALLELISIERTE NUR-REDO-PROTOKOLLIERUNG UND BEHEBUNG FÜR DATENBANKSYSTEME MIT HOCHVERFÜGBAREM HAUPTSPEICHER

ENREGISTREMENT CHRONOLOGIQUE ET RECUPERATION DE DONNEES UNIQUEMENT REDO EN PARALLELE POUR DES SYSTEMES DE BASE DE DONNEES A MEMOIRE PRINCIPALE A HAUTE DISPONIBILITE

(84) Designated Contracting States:
**AT BE BG CH CY CZ DE DK EE ES FI FR GB GR IE IT LI LU MC NL PT SE SK TR**

(30) Priority: **16.07.2001 US 305956 P**
**16.07.2001 US 305937 P**

(43) Date of publication of application:
**14.04.2004 Bulletin 2004/16**

(73) Proprietor: **SAP AG**
**69190 Walldorf (DE)**

(72) Inventors:
• **CHA, Sang Kyun**
**Secho-gu,**
**137-782 Seoul (KR)**
• **LEE, Ju Chang**
**Pyeongtak-shi,**
**451-822 Kyongki-do (KR)**

• **KIM, Ki Hong**
**Songpa-gu,**
**138-160 Seoul (KR)**

(74) Representative: **Rocke, Carsten et al**
**Müller-Boré & Partner**
**Grafinger Strasse 2**
**81671 München (DE)**

(56) References cited:
**EP-A- 0 881 570        WO-A-96/23269**
**US-A- 5 890 154        US-A- 5 946 689**

• **LEE J., KIN K., CHA S.K.: 'Differential loggin: a commutative and associative logging scheme for highly parallel main memory database', 2001, PROCEEDINGS 17 INTERNATIONAL CONFERENCE ON DATA ENGINEERING, 2-6 APRIL 2001, ISBN 0-7695-1001-9 pages 173 - 182, XP010538059**

**Description**

Technical Field

This invention in general relates to database systems and methods. More specifically, the present invention relates to parallelized redo-only logging and recovery for highly available main-memory database systems.

Description of Related Art

A main-memory database management system (MM-DBMS) keeps a database in main memory to take advantage of the continuously improving the price/density ratio of available memory chips. This memory-centered database architecture simplifies the DBMS and enables the MM-DBMS to better exploit the hardware computing power, such as high-speed L2 cache memory, than a disk-resident DBMS (DR-DBMS) where the database is kept in the disk. For database designers and application developers, the simplicity of a DBMS translates to the ease of optimizing the performance of the overall database systems and their applications.

While the benefit of the MM-DBMS has well been perceived for read-oriented transactions, the MM-DBMS can also achieve a higher performance than the DR-DBMS in update transactions because updates in the MM-DBMS incur only sequential disk accesses for appending the update logs to the end of the log file and occasionally checkpointing the updated database pages to the backup copy resident in the disk.

Logging is essential for MM-DBMS to recover a consistent database state in case of a system failure. The recovery involves first loading the backup database in memory and then replaying the log in the serialization order. Checkpointing helps throw away the old portion of the log file and thus shorten the log replay time. Between these two types of run-time disk accesses, the logging performance is more critical than the recovery performance. If an MM-DBMS relies on a single log device in favor of the simplicity of enforcing the serialization order during log replay, its update throughput during logging is bound by the contention on a single log buffer and the I/O bandwidth of the log device.

To address the problem of this bottleneck, multiple log disks for parallel logging has been used. However, a naïve parallel logging scheme pays the cost of merging log records distributed over multiple log disks in the serialization order during recovery. To overcome this problem, Lee *et al* proposed the so-called differential logging that exploits a full degree of parallelism both in logging and recovery. See Juchang Lee, Kihong Kim, and Sang K. Cha, "Differential Logging: A Commutative and Associative Logging Scheme for Highly Parallel Main Memory Database," Proceedings of ICDE Conference, pp. 173-182,2001.

The differential logging scheme uses a bit-wise XOR operation, both associative and commutative, for a redo operation as well as an undo operation so that the log records, each of which contains the bit-wise XOR difference between the after and before images, can be replayed in a manner independent of their serialization order during recovery. Such order independence enables distribution of log records to an arbitrary number of log disks, leading to almost linear scale-up of the update throughput during logging until it is bound by either the CPU power or the I/O bandwidth.

Not only the logging time, but also the recovery time can also be scaled down proportionally by replaying the log records in each log disk independently in a single pass. Even the process of loading the backup database partitioned over multiple disks may proceed in parallel along with the process of replaying the logs once the main memory database is initialized with zeros. In addition to the benefit of parallel execution, the differential logging scheme also reduces the log volume to almost half compared to the conventional redo/undo logging.

Similarly, in the area of non-differential logging, there is also a need for an efficient logging scheme that can exploit massive parallelism.

**OBJECT AND SUMMARY OF THE INVENTION**

It is a problem to provide an efficient logging and recovery scheme based on non-differential logging that can be used to recover a consistent transaction processing system after a failure occurs.

It is another problem to provide a logging and recovery scheme where massively parallel operations are possible.

Thus, according to an aspect, it is a problem to provide a method, a system and a computer-readable storage medium that provide an efficient logging scheme that can exploit massive parallelism in the area of non-differential logging.

This problem is solved by the method being the features disclosed in claim 1, by the system having the features disclosed in claim 17, and by the computer-readable storage medium having the features disclosed in claim 23. Preferred embodiments are defined in the dependent subclaims.

The present invention uses physical logging and selective replaying of log records based on an update sequence number for representing the sequence of updates to the database. A further update sequence number may be a global sequence number (GSN) representing the sequence of updates to the entire database, or a transaction sequence number (TSN) representing the sequence of transactions logged. A preferred embodiment is called "parallel redo-only logging (PROL)" combining physical logging and selective replay of log records using private buffering.

Since the order of replaying log records doesn't matter in physical logging, parallel operations for recovery are possible. Since the physical logging does not depend on the state of the object to which the log records are applied, the present invention makes it easy to construct a log-based hot standby system. The performance evaluation of the present invention on a 4-way multiprocessor system shows that the PROL scheme outperforms the non-parallelized redo-only logging scheme.

**BRIEF DESCRIPTION OF THE DRAWINGS**

Figure 1 is a block diagram of the architecture of a highly parallel and available MM- DBMS of the present invention.
Figure 2 is a block diagram of a highly parallel recovery scheme of the present invention.
Figure 3 is an illustration where the portions of a database covered by two log records overlapping each other.
Figure 4A is the structure of an update log record structure in a preferred embodiment using SSN-based PROL.
Figure 4B is the organization of a page stored in main memory in SSN-based PROL.
Figure 5 is a block diagram of the logging system architecture of the present invention using SSN-based PROL.
Figure 6 is a block diagram of the PROL-based hot standby system architecture.
Figure 7 is a graph of the logging throughput with varying number of log disks.
Figure 8A is a graph of the logging throughput with varying slot sizes.
Figure 8B is a graph of the logging throughput in a 4-way multiprocessor platform during logging with the abort ratio varying from 0% to 20%.
Figure 9 is a graph comparing the logging throughput of the stand-alone server with that of the master server that ships SSN-based PROL log records to the slave server.
Figure 10 is a graph of the log processing time in seconds with varying number of log disks.
Figure 11A is a graph of the log processing time with varying slot sizes in a 4-way multiprocessor platform.
Figure 11B is a graph of the log processing time when 1.2 M transactions are replayed in a 4-way multiprocessor platform.
Figure 12A is a graph of the measured restart time with two log disks and two backup disks.
Figure 12B is a graph of the measured restart time with four log disks and four backup disks.

**DETAILED DESCRIPTION OF THE INVENTION**

**A. ARCHITECTURE OF HIGHLY PARALLEL AND AVAILABLE MM DBMS**

Highly Parallel Logging

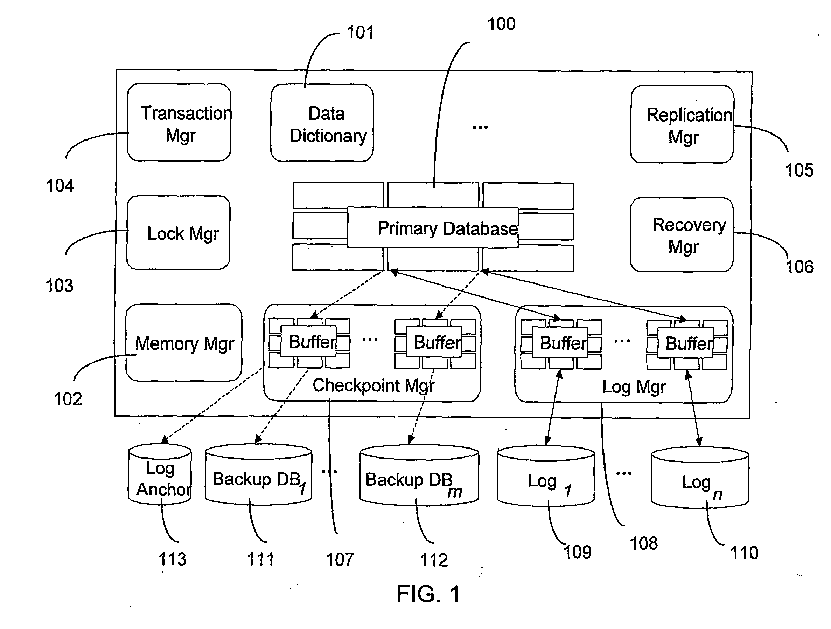

FIG. 1 shows the architecture of a highly parallel and available MM-DBMS of the present invention, where database functionalities are implemented with a primary database 100, a data dictionary 101 for storing metadata about the structure of the database, and a number of database managers, such as a memory manager 102 for managing allocation of space and data structures in main memory, a lock manager 103 for managing a locking table used for concurrency control among transactions executing concurrently, a transaction manager 104 for ensuring that the database remains in a consistent state despite a system failure, a replication manager 105 for managing a remote backup copy in case of environmental disasters, a recovery manager 106 for recovering a consistent database state in case of a system failure, a checkpoint manager 107, and a log manager 108.

The log manager 108 is responsible for logging updates to the database 100 by generating log records. Each log record contains the physical image of the updated portion of the database. Logging is done in parallel by distributing log records to multiple log disks such as 109 and 110. In the present invention, log records may be preferably partitioned into multiple disks by transaction IDs (TIDs).

The checkpoint manager 107 is responsible for checkpointing, the process of making backup copies of the entire database from time to time. In the present invention, checkpointing may be done in parallel by partitioning each backup copy into multiple backup disks such as 111 and 112. A preferred system may maintain two backup copies based on the ping-pong checkpointing scheme. The locations of backup databases and important log records such as ones recording the beginning and the end of checkpointing are kept in a log anchor 113. In case of a system failure, a consistent state of the primary database 100 is recovered from the log and the most recent backup database.

The primary database 100 preferably consists of a number of fixed-size segments, where a segment is the basic unit of memory allocation. A segment is divided into fixed-size pages, and a page is again divided into fixed-size slots. Although the size of a slot is fixed within a page, it may vary by pages. A record is basically stored in one slot while a variable-length record is handled by linking multiple fixed-size slots. The size of a slot is determined when formatting a page in order to allocate it to a table. When a page becomes free by deletion of a record, it is added to the global free page list. The preferred embodiment uses fine-granular, slot-level locking and logging.

Highly Parallel Recovery Operations

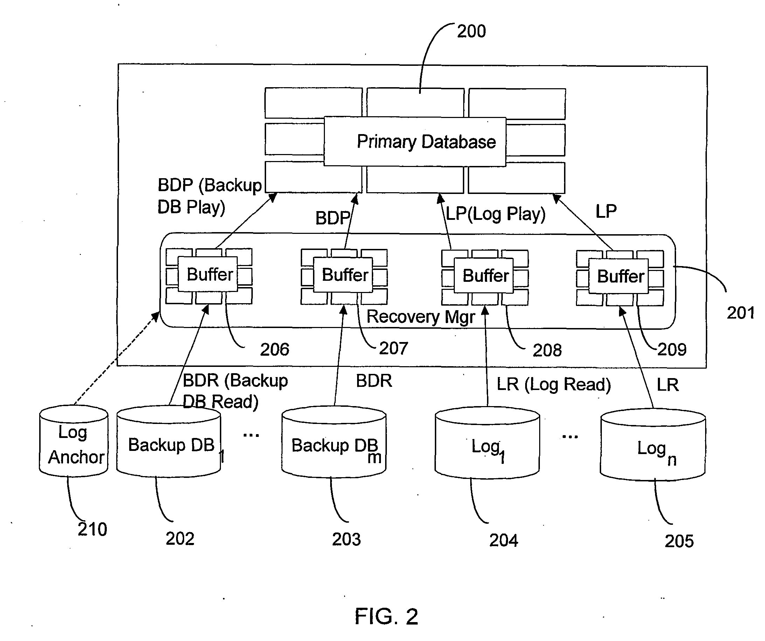

FIG. 2 shows a highly parallel recovery scheme of the present invention where the recovery time can be scaled down proportionally as well by replaying the log records in each log disk independently in a single pass.

A primary database 200 is located in main memory is reconstructed in case of a system failure by reading and playing backup database stored in back disk such as 202 and 203 trough buffers such as 206 and 207 in a recovery manager 201, and reading and playing log records stored in log disks such as 204 and 205 through buffers such as 208 and 209 in the recovery manager 201.

Since most of the conventional logging schemes require replaying log records by the serialization order, the achievable degree of parallelism during recovery is limited. Suppose that log records are distributed to multiple disks by transaction IDs (TIDs). Then, the log records stored in multiple disks should be merged in the serialization order before replaying. Or suppose that the database is partitioned and log records are distributed to log disks by that partitioning. This resource-partitioned parallel logging does not scale up well when updates are skewed to certain partitions or transactions span multiple partitions.

To overcome this limitation of conventional logging schemes, order-independent log replay has been explored by Lee *et al* based on differential logging. See Juchang Lee, Kihong Kim, and Sang K. Cha, "Differential Logging: A Commutative and Associative Logging Scheme for Highly Parallel Main Memory Database," Proceedings of ICDE Conference, pp. 173-182, 2001.

Order independence of log replaying enables the MM-DBMS to distribute log records without restriction to an arbitrary number of log disks, leading to an almost linear scale-up of the update throughput during logging until it is bound by either the CPU power or the IO bandwidth. The recovery time can be scaled down proportionally as well by replaying the log records in each log disk independently in a single pass. Even loading of the backup database, which may be partitioned over multiple disks for further parallelism, can proceed in parallel with replaying log records.

**Theorem 1. (Order Independence of commutative and associative log replay)**

Suppose that a redo operation $(O \rho L)$ and an undo operation $(O \upsilon L)$ are commutative and associative for a slot O and a log record L. Then, given the initial state $O_0$ of O and a set of log records $\{L_i \mid 1 \le i \le m\}$, the final state $O_m$ of O can be recovered from the initial state $O_0$ by redoing the log records in an arbitrary order, and the initial state $O_0$ can be recovered from the final state $O_m$ by undoing the log records in an arbitrary order.

**Proof.** The final state $O_m$ can be obtained by redoing the log records in their generation order, namely $O_m = O_0 \rho L_1 \rho L_2 \rho ... \rho L_m$. Suppose that the log records are redone in the order of $L_{k(1)}, L_{k(2)}, ..., L_{k(m)}$, where $k(i) \in \{1, 2, ..., m\}$ and $k(i) != k(j)$ for all i and j, i !=j. Then, $O_0 \rho L_{k(1)} \rho L_{k(2)} \rho ... \rho L_{k(m)} = O_0 \rho L_1 \rho L_2 \rho ... \rho L_m = O_m$.

Conversely, the initial state $O_0$ can be obtained by $O_0 = O_m \upsilon L_m \upsilon L_{m-1} \upsilon ... \upsilon L_1$. Suppose that the log records are undone in the order of $L_{k(1)}, L_{k(2)}, ..., L_{k(m)}$, where $k(i) \in \{1, 2, ..., m\}$ and $k(i) != k(j)$ for all i and j, i !=j. Then, $O_0 \upsilon L_{k(1)} \upsilon L_{k(2)} \upsilon ... \upsilon L_{k(m)} = O_m \upsilon L_m \upsilon L_{m-1} \upsilon ... \upsilon L_1 = O_0$. ∎

As shown in Theorem 1, any logging scheme with commutative and associative redo and undo operations can replay log records in an arbitrary order. One such scheme is the so-called differential logging, which logs the bit-wise XOR difference between the after and the before images and replays log records by applying the same XOR operation.

The present invention presents alternative ways of implementing the associative and commutative redo and undo operations based on physical logging so that the order of replaying log records doesn't matter.

Log-based Management of Hot Standby

In a hot standby configuration, one server acting as a master server is being actively used to run a database, while another server acting as a slave server is in standby mode ready to take over if there is an operating system or hardware failure involving the first server. Typically, a message called "heartbeat" is passed between the two servers to monitor the working condition of each other server.

For high availability, the management of a hot standby system with the 1-safe scheme may be used, where a transaction can commit before successfully sending its log records to the slave server. In this scheme, the slave server continuously replays log records received from the master server. If no *heartbeat* message arrives from the master server for a given period, the slave server automatically takes over after aborting all the transactions alive. When the failed master server restarts, it first asks the latest reflected log record ID (identification) to the taken-over server. Then, it collects the transactions committed in the log located after that log record and sends all the collected log records to the taken-over server. Finally, it receives the log records generated during its down time from the taken-over master server and replays them. One may use the 1-safe scheme for simplicity, but those skilled in the art would appreciate similar schemes can be used for other replication schemes.

## B. SELECTIVE LOG REPLAY

The present invention replays log records selectively to fully exploit the parallelism. The selective log replay is based on the observation that the consistent state of a slot can be recovered by replaying the latest log record for the slot when using physical logging. Replaying intermediate log records doesn't matter because the last log record replayed overrides all the log records replayed thus far for a given slot. To make selective log replaying possible, it is necessary to maintain an update sequence number or timestamp of a given slot to be that of the last log record replayed for that slot during the recovery time. Then, the log records whose update sequence number is smaller than the update sequence number of a slot may be safely discarded.

### Definition 1. (Selective redo and undo operations)

Suppose that sn(O) or sn(L) denotes the update sequence number of a slot O or a log record L. Then, the selective redo operation (O $\rho$ L) and selective undo operation (O $\mu$ L) for a slot O and a log record L are defined by

$$O \rho L = \begin{cases} L, & \text{if } sn(O) < sn(L) \\ O, & \text{otherwise} \end{cases} \text{ and } sn(O \rho L) = \begin{cases} sn(L), & \text{if } sn(O) < sn(L) \\ sn(O), & \text{otherwise} \end{cases}$$

$$O \mu L = \begin{cases} L, & \text{if } sn(O) > sn(L) \\ O, & \text{otherwise} \end{cases} \text{ and } sn(O \mu L) = \begin{cases} sn(L), & \text{if } sn(O) > sn(L) \\ sn(O), & \text{otherwise} \end{cases} \blacksquare$$

### Theorem 2. (Order Independence of the selective log replay operations)

If $\rho$ and $\mu$ are defined by the Definition 1, it enables order independent log replay. **Proof.** Suppose that $sn(L_1) < sn(L_2) < sn(L_3)$ for log records $L_1$, $L_2$, and $L_3$. Then,

$$(O \rho L_1) \rho L_2 = L_1 \rho L_2 = L_2, \text{ and } (O \rho L_2) \rho L_1 = L_2 \rho L_1 = L_2$$

$$\therefore (O \rho L_1) \rho L_2 = (O \rho L_2) \rho L_1$$

$$((O \rho L_1) \rho L_2) \rho L_3 = (L_1 \rho L_2) \rho L_3 = L_2 \rho L_3 = L_3, \text{ and } ((O \rho L_2) \rho L_3) \rho L_1 =$$

$$L_3$$

$$\therefore ((O \rho L_1) \rho L_2) \rho L_3 = ((O \rho L_2) \rho L_3) \rho L_1$$

Therefore, $\rho$ is commutative and associative operator. The same holds for the $\mu$.

By the Theorem 1, $\rho$ and $\mu$ enable the order independent log replay. $\blacksquare$

Although this selective log replay can be applied to any kind of physical logging including redo-undo logging or redo-only logging, redo-only logging is preferable in favor of the reduced log volume, comparable to that of the differential logging.

Update Sequence Numbers

**[0037]** There are several choices for the update sequence number. A simple choice is to timestamp log records when the precision of timestamps is enough to distinguish any two updates on the same slot. An obvious alternative is to maintain a single, global sequence number with Algorithm 1 for each update. However, using a single counter incurs a contention on the counter during the parallel logging. Even during the recovery, a single, global hash table has to be built to maintain the update sequence number for the slots that are replayed by the encountered log records. Since each log loader at recovery accesses the global hash table, it incurs the contention.

**Algorithm 1. Global Sequence Number (GSN)**

> 1. Acquire the latch for the global counter
> 2. Increase the counter by 1 and save the current value of it
> 3. Release the acquired latch
> 4. Return the saved counter value

In order to lessen the contention on the global counter and the global hash table, it is possible to partition the database and maintains a counter for each partition. Since each partition has the space for its own counter, the global hash table need not be built during the recovery. The size of a partition can be chosen arbitrarily from the entire database to a slot. As the size of a partition decreases, the contention will be lessened but the space overhead for the local counters will grow. Thus, the choice will be guided by a tradeoff between space needed for the local counters and the contention incurred by global counter.

**Optimization 1.** When a counter covers a smaller portion of the database than a transaction lock does, access to the counters does not require any latching.

For example, since transactional locking is generally performed at the slot or higher level, maintaining a counter for each slot allows a transaction to access the counters without any latching as in Algorithm 2. Note that only one transaction can update a slot at a given moment, and the same for a counter.

**Algorithm 2. Slot Sequence Number (SSN)**

> 1. Increase the counter for the given slot by 1
> 2. Return the current value of the counter

Even with the global sequence number, there is room for reducing the lock contention, especially when a transaction involves a number of updates. If the log records of a transaction are stored consecutively on disk and the transaction generates only a log record for the slot updated multiple times, assignment of the global sequence number can be deferred until the commit time as shown in Algorithm 3.

**Algorithm 3. Transaction Sequence Number (TSN)**

> 1. If this is the first call by the given transaction, invoke Algorithm 1 and save the return value
> 2. Return the saved counter value

According to these two optimization rules, slot sequence number (SSN) and the transaction sequence number (TSN) are used. It is also assumed that the slot-level locking and the so-called private log buffering, which guarantees that the log records of a transaction are stored consecutively on disk and the transaction generates only a log record for the slot updated multiple times.

Handling Limitation of Selective Log Replay

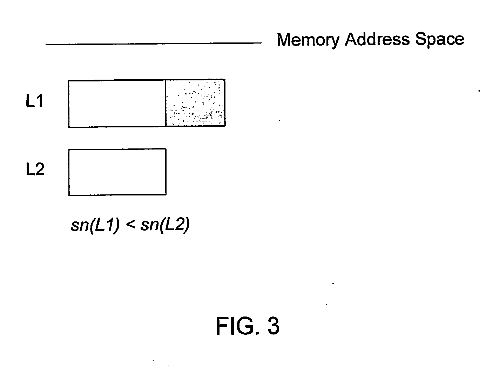

There may be a situation where two log records cover either the same portion of the database or non-overlapping portions of the database. FIG. 3 shows such a situation where situation shown in FIG. 3, where the portions of database covered by the log records L1 and L2 overlap each other. Suppose that L1 is encountered after L2 has been replayed. Then, L1 is discarded because it has a smaller update sequence number than L2, and this may result in the loss of information recorded in the shaded area of L1.

Such a situation does not occur when logging is done at the page level, because the size of a page is fixed in most of database systems. However, it may occur when the slot-level logging assumed. A page is formatted with a desirable slot size when it is popped out of the free page list. Thus, the slot size in a page can vary with time, and this leads to the situation shown in FIG. 3. This situation should be handled carefully, especially when storing an update sequence number within a slot. If the slot size at the time of log record creation is different from the slot size at the time of replay, it is impossible to compare the update sequence number of a log record to that of a slot.

To address the above situation, another sequence number named PVN(page version number) is introduced. Residing in the header of each page, the PVN is increased by one when a page is formatted with a different slot size. When creating a log record, the PVN value of the corresponding page is copied to the log record. During recovery, a log record with a smaller PVN value than the corresponding page is discarded.

Another limitation of selective replay is that timestamps need to be reset in order to avoid their overflow. Resetting timestamps should be performed in an action-consistent state, followed by action-consistent checkpointing. Fortunately, the action-consistent checkpointing is needed rarely although it interferes with user transactions

## C. PARALLEL REDO ONLY (PROL) IMPLEMENTATION

Private Log Buffering

A preferred embodiment of the present invention uses parallel redo only logging ("PROL") that combines redo-only logging followed by selective reply. To implement PROL, a private log buffering method is used. The private log buffering method maintains the redo and undo log records of active transactions in their own private memory space constituting one or more private buffers. When a transaction commits, only the redo records are flushed together with a commit log record. The undo records of a transaction are used for aborting the transaction, but they are not written to disk. In this way, only the redo records need to be written to the disk.

Such private log buffering method has the following advantages over the contrasted public log buffering, which writes both redo and undo records to a public log buffer once they are generated. Note that the private log buffering also needs a public log buffer, but it is accessed only when the transaction commits.

- When a transaction aborts, there is no need to write its log records on the disk except when a checkpointing is performed. But, in the public log buffering, since the aborted transaction's log record may be already stored on the log disk, the so-called compensation logging is needed to reduce the amount of undo operations during the post-crash recovery.
- If a transaction involves a number of updates, the private log buffering method reduces the contention on the public log buffer.
- Since the log records of different transactions are intermixed on the disk in the public log buffering, it is not easy to collect the log records of a loser transaction. But, since the private log buffering method stores the log records of a transaction consecutively on the disk in the private log buffering, only the tail in the log file may be inspected.

The private log buffering method requires more memory space than the public log buffering method. To reduce such memory overhead under in-place update scheme, PROL does not maintain after images of the redo log record in the private log buffer when an update takes place. Instead, the after images are collected and directed to the public log buffer when the transaction commits. For an active transaction, the modified private log buffering in PROL requires the space for only the undo log records and some information needed for gathering the after images. Another advantage of this modification is to require only a log record when a transaction updates the same slot multiple times.

The modified private log buffering is applied to even to the differential logging. Since a differential log record is used for both redo and undo operations, only the differential log records can be maintained in the private log buffer.

Log Record and Page Structure

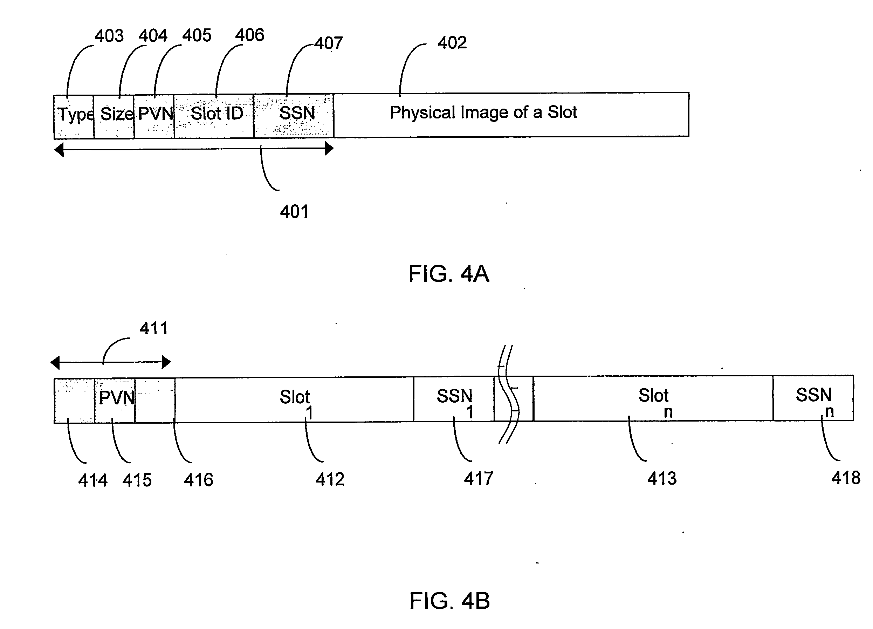

FIG. 4A shows the structure of an update log record structure in a preferred embodiment using SSN-based PROL. There may be five types of log records in SSN-based PROL: *update, begin_transaction, commit_transaction, begin_checkpoint*, and *end_checkpoint*. Among these, the *abort_transaction* type is not needed for SSN-based PROL because the log records of the aborted transactions on disk are not written.

The update log record consists of a log header 401 and the physical image of a slot 402. The log header 401 further consists of a slot sequence number (SSN) 407, a slot ID 406 representing the address of the slot to which the log record will be applied, a size 404 represents the size of the slot, a type 403 specifying the type of log records, and a page version number (PVN specifying a page version.

Differently from this structure of the *update* record, the log records for *begin_transaction* and *commit_transaction* will have just two fields: the type and transaction ID (TID) fields. In the page header, the dirty flag indicates whether this page needs to be checkpointed or not. The bitmap field represents whether each slot is free or not.

FIG. 4B shows the organization of a page stored in main memory in SSN-based PROL. It consists of a page header 411 and multiple slots such as 412 and 413. Each page header stores a dirty flag 414, a page version number (PVN) 415, and a bit map 416 for recording the state of each slot in the page. The state is set to "occupied" if data is inserted to the corresponding slot or "free" if data is erased from the slot. Stored together with each slot is an update sequence number most recently played such as 417 or 418.

TSN-based PROL uses a slightly different log record structure and page organization from those of the SSN-based PROL. The SSN field is unnecessary in the *update* log record. Instead, the TSN value obtained at the commit time is attached to the *begin_transaction* record. In the page header, no such update sequence number field as SSN is needed.

Parallel Logging and Checkpointing

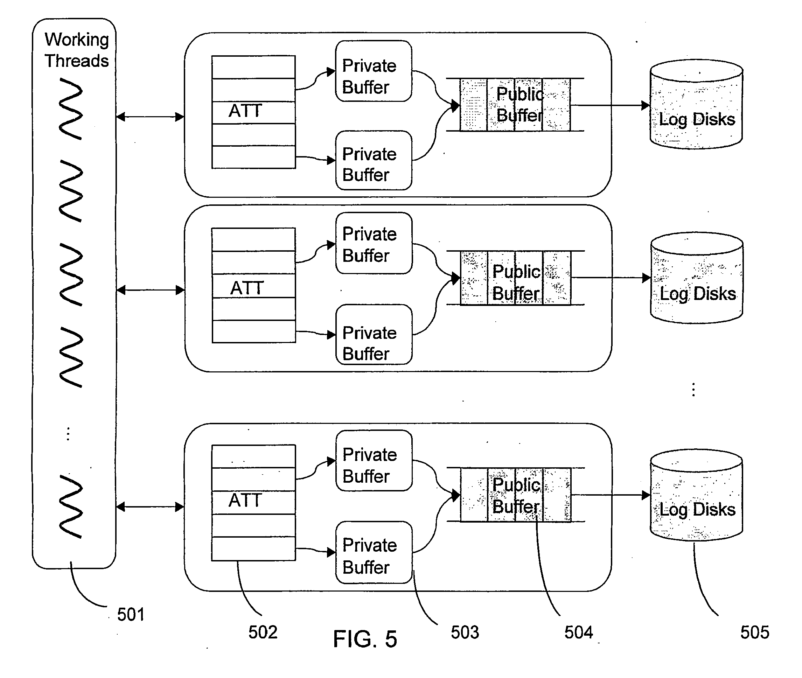

FIG. 5 shows the logging system architecture of the present invention using SSN-based PROL. The commutativity and associativity of the redo operations in PROL of the present invention enable unrestricted distribution of the log records to multiple log disks. To reduce the contention on the shared data structures, active transaction tables (ATT) such as 502 for storing the list of active transactions, private log buffers such as 503 for storing both redo and undo tranactions, and the public log buffers such as 504 for storing committed redo transactions are partitioned by the log disks.

ATT such as 502 is used to find the transactions that are reflected to the backup database, but are aborted later. This table is initialized from the active transaction list. Such list is stored in the log anchor just before the recent checkpointing completes. When reading a commit record, the corresponding entry in the ATT is removed, if exists. After the roll forward completes, the remaining transactions in the ATT are the transactions that should be undone.

The SSN-based PROL maintains a local counter on each slot. Alternatively, the TSN-based PROL maintains a global counter for counting transactions. Note that since the slot-level transactional locking is assumed, maintaining SSN does not incur any additional contention.

Algorithms 4, 5, and 6 are the update, transaction commit, and transaction abort algorithms in the SSN-based PROL. The generation of redo log records is deferred until the transaction commit time. The log buffering thread and the log flushing thread are separated from each other so that the log buffering thread committing a transaction may not remain idle until its log records are flushed. If there are any log records to flush in the public log buffer, the log flushing thread flushes them and finishes the remaining commit processing for the transactions included in the flushed log.

**Algorithm 4. Update**

1. Generate the redo log record and undo log record in the private log buffer.
2. Update the slot.
3. Copy SSN of the slot and PVN of the page into the redo log record, and increment SSN.

**Algorithm 5. Transaction Commit**

1. Generate the redo records by combining the headers and after images, and append them together with a transaction commit record.
2. Flush the private log buffer to the corresponding public log buffer.
3. Wait until the redo log records are written to the disk.
4. Release all the locks that the transaction holds.
5. Notify the user that the transaction has been committed.
6. Remove the matching element from the ATT.
7. Delete the private log buffer for the transaction.

**Algorithm 6. Transaction Abort**

1. Apply the undo log records to the primary database.
2. Release all the locks that the transaction holds.
3. Notify the user that the transaction has been aborted.
4. Remove the matching element from the ATT in a latched state.
5. Delete the private log buffer for the transaction.

PROL can be used with parallel checkpointing, as shown in Algorithm 7. Each checkpointing thread flushes dirty pages located in its own checkpointing partition. To allow the execution of the user transactions during checkpointing, it is required to write undo log records of the ATT and active transaction list at that moment just before the transaction completes. And also, such undo logging is done for each transaction/log partition in parallel. It is assumed that such undo log records are stored on the same disk with the redo log file, but separately.

**Algorithm 7. Parallel Checkpointing**

1. Create a begin_checkpoint record and append it to all the public log buffers.
2. Choose the backup database that was the least recently checkpointed as the current backup database.
3. For each checkpointing partition in parallel,

   A. While scanning the database page by page, copy all the dirty pages into the current backup database asynchronously.
   B. Wait until all the asynchronous I/Os are completed.

4. For each transaction/log partition in parallel,

   A. Hold a latch on the ATT.
   B. Write the undo log of all the active transactions on the assigned disk.
   C. Write the active transaction list on the assigned disk.
   D. Release the latch.

5. Append an end_checkpoint record into all the public log buffers and update log anchor with the current backup database ID and begin checkpointing the positions of the log records.

Parallel Restart

PROL of the present invention supports the fully parallel restart by allowing multiple log disks to proceed simultaneously with loading backup disk partitions. Algorithm 8 presents the steps for processing the individual log disk. Similarly, Algorithm 9 presents the steps for loading a backup disk partition.

In the case of TSN-based PROL, a global hash table is maintained to bookkeep the TSN value of each replayed slot. All slot ID and TSN pairs should be included in the hash table. But, the loaded backup slots may be excluded, because some of them will not be updated by log records and the remaining will be replayed by the log record with the same slot image.

**Algorithm 8. Log Processing in Restart**

1. Read the position of begin_checkpoint record from the log anchor and mark it as the begin of the log.
2. Initialize ATT from the active transaction list stored in the log anchor.
3. Go backward in the log from the end until the first commit record is encountered. Mark the position as the end of the log.
4. From the marked log begin to the marked log end, go forward in the log, doing the following:

A. For an update log record,

(i) Hold a latch on the page.
(ii) If the update record's PVN is larger than or equal to the page header's PVN, proceed to the following step. Otherwise, release the latch and ignore this record.
(iii) If the update record's SSN is larger then the slot's SSN, redo and update the slot's SSN with the record's SSN. Otherwise, ignore the current update record.
(iv) Release the latch.

B. For a commit log record,

(i) Remove the corresponding TID in the ATT, if it exists.

5. Wait until the backup loading completes.
6. Roll back the remaining TIDs in the ATT.

**Algorithm 9. Backup Loading**

1. Find the recently checkpointed backup DB copy from the log anchor information.
2. Read the pages of this backup DB into the backup DB buffer.
3. For each page read in the backup DB buffer, do:

A. Hold a latch on the page.
B. If the buffered page's PVN is equal to or larger than the primary page header's PVN, proceed to the following step. Otherwise, release the latch and skip this page.
C. For each slot s in the page, do:

(i) If the slot SSN of s is larger than the SSN of the corresponding slot t in the primary database, override the image and SSN of t with the after image and SSN of t, respectively.
(ii) Otherwise, ignore the current update record.

D. Release the latch.

PROL-Based Hot Standby System Architecture

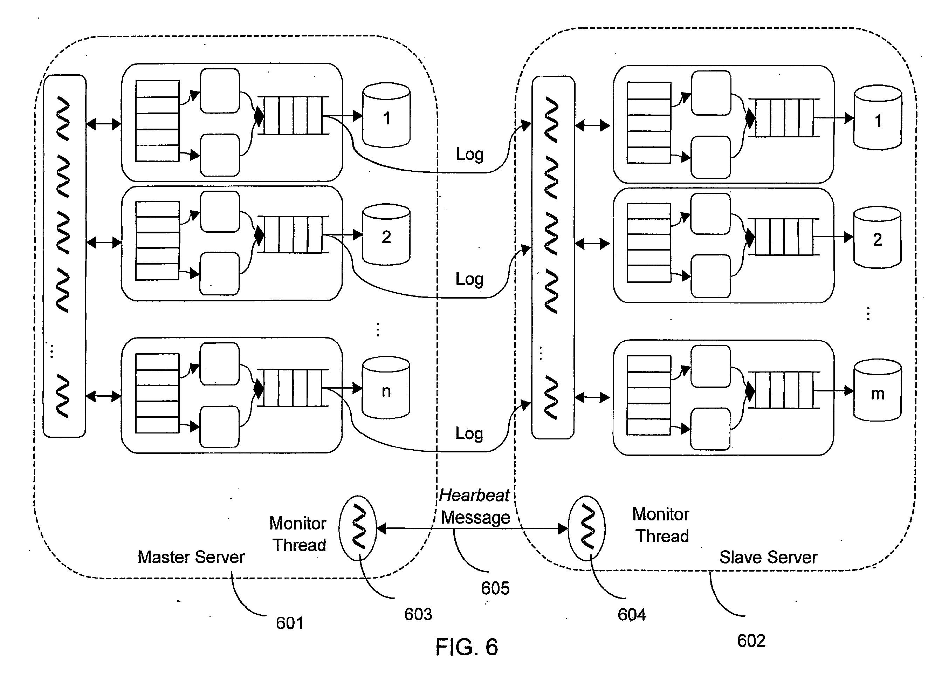

FIG. 6 shows the PROL-based hot standby system architecture. . This hot standby architecture also exploits the parallelism in log-based synchronization. Multiple log streams are established between a master server 601 and a slave server 602. Since PROL enables order-independent log replay, there is no need to merge the multiple log streams in the slave server. Instead, the slave server can replay them in parallel. Only the log records of committed transactions are propagated to the slave server.

Following the 1-safe log synchronization, the master server 601 propagates the log pages that are safely stored on the disk. The slave server 602 replays the log records in the received pages and returns the acknowledgement message to the master server. The monitor threads 603 and 604 send and receive a *heartbeat* message 605 periodically. If no *heartbeat* message arrives from the master server for a given period, the slave server 602 automatically takes over.

To deal with the inconsistency between two participating servers incurred by the 1-safe scheme, the synchronization process is done as described in Algorithms 13 and 14. The lost transactions' log records are retransmitted to the taken-over server, and the log records arrived to the taken-over server are replayed selectively. If the slot to which the lost transaction's log record is applied has been updated after taking over, the log record is ignored. As the result, the images of two servers are converged to a consistent and up-to-date state.

The simplified hot standby algorithms are described in Algorithms 10 to 14 as follows.

**Algorithm 10. Takeover of the Slave Server**

1. Wait until all the received log records are replayed.

2. Abort the active transactions at the moment.
3. Set the sync_position as the recently received log record ID.
4. Set the send_position as the tail address of the log file.
5. Resume the transaction service.

**Algorithm 11. Normal Processing of the Master Server**

Iterate the following:

A. If the connection with the slave server is available,

(ii) Send a log page located from the send_position to the slave server, if it is reflected to the log disk.
(ii) Receive an acknowledgement message from the slave server, and increment the send_position by the size of the successfully sent log page.

(B) Otherwise,

(i) Wait until it is recovered.
(ii) If the recovered slave server requires the synchronization process, invoke Algorithm 14.

**Algorithm 12. Normal Processing of the Slave Server**

Iterate the following:

(A) If the connection with the slave server is available,

(i) Receive a log page from the master server, and replay log records in the page.
(ii) If the received log record is safely stored in the log disk, send the acknowledgement message to the master server.

(B) Otherwise,

(i) If the heartbeat message does not arrive for a period, invoke Algorithm 10.

**Algorithm 13. Restart of the Failed Master Server**

1. Do the following synchronization process for lost transactions:

(i) Require the synchronization processing by asking the sync_position to the taken-over server.
(ii) Collect the transactions that are committed in the log located from the sync_position.
(iii) Send all the log records generated by the collected transactions to the taken-over server.

2. Invoke Algorithm 12.

**Algorithm 14. Synchronization Process of the Taken-over Server**

1. Send the sync_position to the failed master server.
2. For each received log record of the lost transactions, do:

(i) If the timestamp of the log record is larger than that of the corresponding slot, replay it with transactional locking.
(ii) Otherwise, ignore the log record.

## D. EXPERIMENTAL RESULTS

To compare the logging and recovery performance of PROL of the present invention with those of the differential logging scheme (DL) and the non-parallelized redo-only logging (ROL) scheme, a series of experiments were conducted. As previously mentioned, private log buffering is combined with PROL and ROL. For a fair comparison with PROL, differential logging was implemented with private log buffering (DL-private) as well as one with public log buffering (DL-public). Two variants of PROL were implemented: PROL with a slot sequence number (PROL-SSN) and PROL with a transaction sequence number (PROL-TSN).

A test database was used which models a simplified SMS(short message service) message table with three fields. The size of a record or a slot was 256 bytes. The primary database included 2.5 million records, and thus the size of the primary database was 620 ~ 639MB. Since PROL-SSN maintains the SSN for each slot, it consumes a little more space than other schemes. For the 2.5 million record database, this SSN overhead is around 19MB.

There are two types of transactions: one inserts two records into the message table, and another deletes two records from the table. Table 1 shows the log overhead incurred by each scheme for each of these transactions: transaction begin/commit records, and the update log header. PROL-SSN and DL-public have the biggest overhead because PROL-SSN requires the update sequence number field for each update log record, and DL-public requires the previous LSN field for each update log record, where the previous LSN field is used for rolling back loser transactions without scanning all the unrelated log records. On the other hand, ROL and DL-private show the smallest overhead. Since PROL-TSN attaches an update sequence number only to a transaction begin record, its log record overhead is slightly higher than ROL or DL-private.

Table 1. The Log Overhead for a Transaction with Two Updates

| Logging Scheme | PROL-SSN | PROL-TSN | DL-private | DL-public | ROL |
|---|---|---|---|---|---|
| Log Overhead | 64 B | 56 B | 48 B | 64 B | 48 B |

The experiment was conducted on a shared-memory multiprocessor PC server with four 700 MHz Xeon CPUs, 8 GB RAM, and dozen SCSI disks. The average seek time of each disk was 5.2 msec, average rotational latency was 4.17 msec, and the internal transfer rate was 20~30 MB/sec. The server had an Adaptec 160 SCSI card, which supports up to 160 MB/sec. For a hot standby experiment, two PC servers were connected with a gigabit Ethernet switch. In each PC server, the SCSI card and a gigabit Ethernet card are linked via a 64bit/66Mhz PCI bus.

### Logging Performance

The logging throughput was measured by varying the number of log disks, the abort ratio, and the size of a slot when the system is overloaded. The size of a group in the public log buffer was fixed at 128 KB.

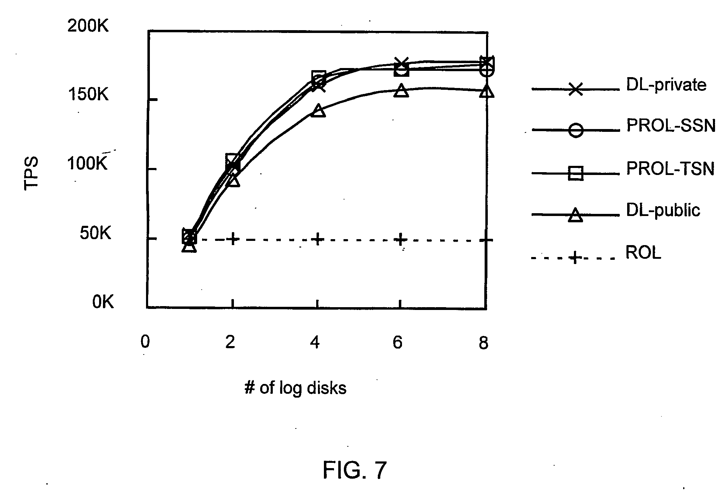

FIG. 7 shows the logging throughput in TPS (transactions per second) with the number of log disks. The transaction abort ratio was 5%. The observation is summarized as follows.

- The throughput of parallelized logging schemes increased almost linearly with the number of disks until it becomes saturated, while the non-parallelized scheme, ROL was not scalable. The best parallelized schemes outperformed ROL by about 3.5 times.
- PROL-TSN, PROL-SSN, and DL-private showed almost the same throughput. The throughput of DL-public was a little lower than that of these schemes because of the contention on the public log buffer. Since a transaction generated a pair of begin/commit transaction records and two update records in this experiment, the DL-public accessed the public log buffer four times as many as other schemes with the private buffering.
- The throughput of the parallelized schemes beccame saturated when the number of log disks was more than 4. The SCSI channel becomes saturated when the disks were fully used for logging.

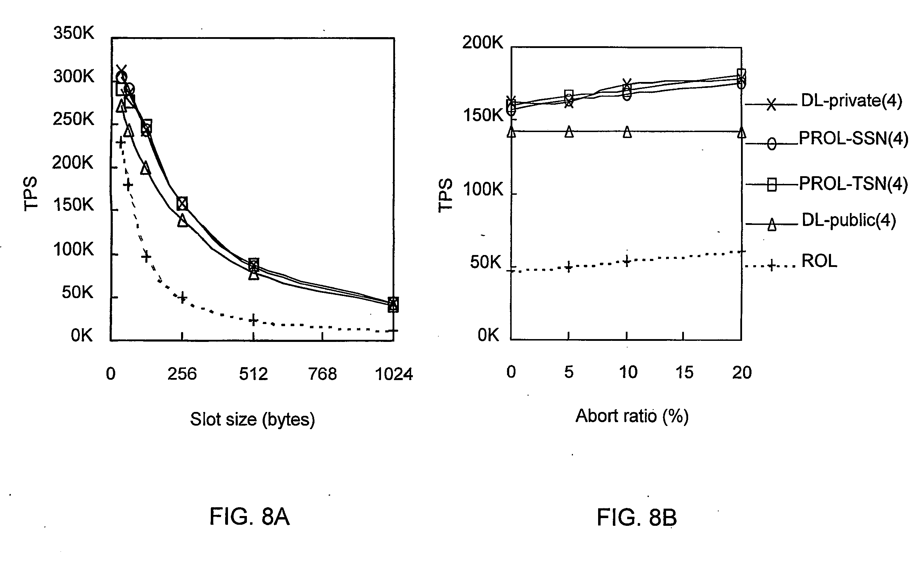

FIG. 8A shows the logging throughput with the varying slot size. It is noted as the throughput goes down as the slot size increases, the performance of DL-public converged to that of other parallelized schemes with the private buffering because of the reduced contention on the public log buffer.

FIG. 8B shows the logging throughput with the abort ratio varying from 0% to 20% in a 4-way multiprocessor platform. Since the private log buffering does not write any log records to the disk for the aborted transactions, the required log disk I/O will slightly decrease with the increasing abort ratio while the aborted transactions contribute to the throughput. DL-public(4) shows no change with the varying abort ratio because it writes log records for the aborted transactions according to the compensation logging scheme. As the result, when the abort ratio is 20%, DL-private(4), PROL-SSN(4), and PROL-TSN(4) outperform DL-public(4) by 1.26 times, and ROL by 2.95 times.

To see the effect of the log-based synchronization on the run-time throughput, the PROL-SSN-based log shipping scheme was implemented.

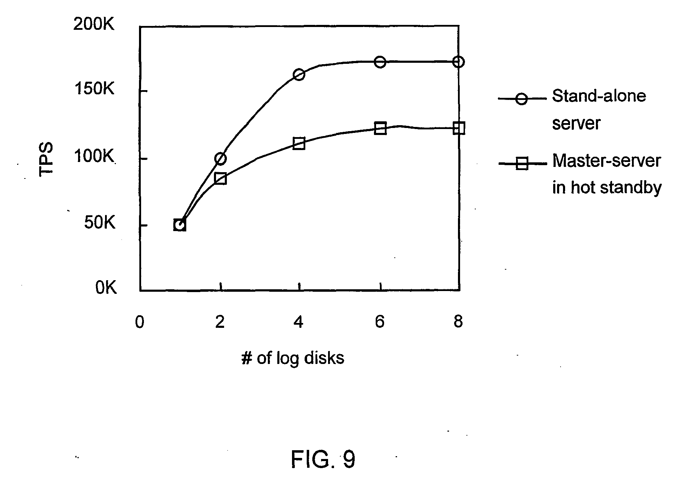

FIG. 9 compares the logging throughput of the stand-alone server with that of the master server that ships PROL-SSN log records to the slave server. As the number of log disks increases, the throughput of the master server decreases to about 70% of the stand-alone server throughput. Such performance gap is due to the following two reasons.

- During the log propagation to the network, the log in DRAM is transferred to both the SCSI card and the Ethernet card via PCI bus. Therefore, the logging throughput is limited by the bandwidth of the PCI bus as well as that of the SCSI channel.
- When the log shipping speed is as fast as the log flushing speed, there is no need to access the log disk for the log propagation because the log buffer can hold them until it is exploded. If this is not the case, the sequential access to the log disks for log writing may be disturbed by the log shipping threads. Therefore, it is expected that the performance gap becomes larger if the log propagation rate to the network is not so high.

Recovery Performance

To gauge the practical impact of parallel recovery, the restart time during recovery was also measured. The restart time is broken down to the backup DB loading time and the log processing time.

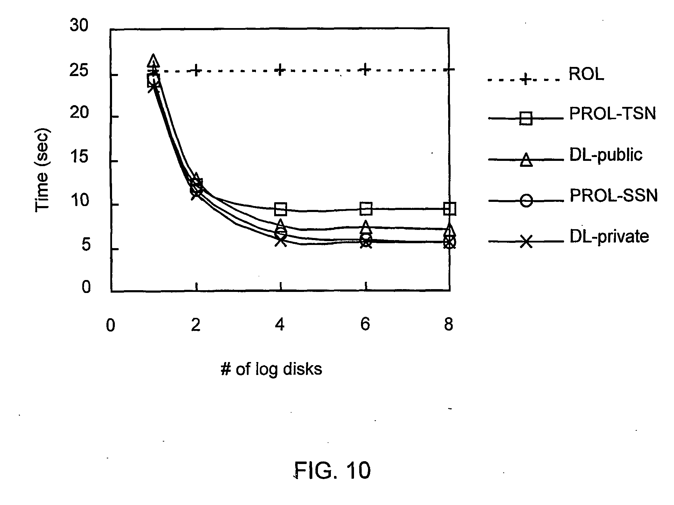

FIG. 10 shows the log processing time in seconds with the number of log disks. 1.2 M transactions were replayed during the log processing. The log volume was 739 MB for PROL-SSN or DL-public, 650 MB for PROL-TSN, and 640 MB for DL-private or ROL.

- The log processing time of the parallelized schemes decreased with the number of log disks, while the non-parallelized, ROL did not.
- The log processing time of PROL-TSN was saturated when the number of disks was more than 2. The restart hash table for TSN incurred more contention with the increasing number of disks.
- The log processing time of DL-public was longer than that of PROL-SSN or DL-private. This is because the log volume of DL-public was slight larger than the other two schemes due to the compensation logging for aborted transactions. For this experiment, the 5% abort ratio was assumed.
- The log processing time of DL-public, DL-private, and PROL-SSN became saturated when the number of log disks approached to six, when the SCSI channel became saturated.
- Two best schemes, DL-private and PROL-SSN, outperformed ROL by 4.5 times in the experimental environment.

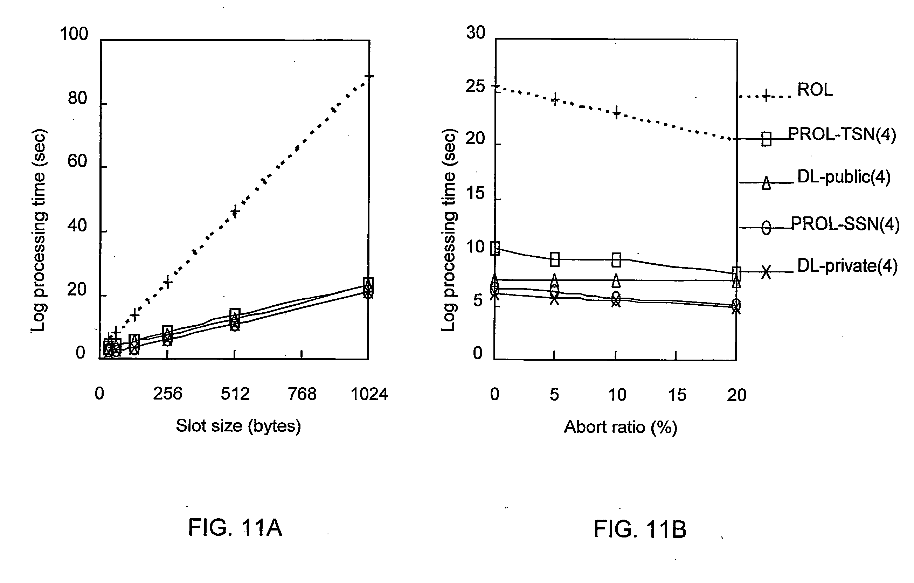

FIG. 11A shows the log processing time with varying slot sizes in a 4-way multiprocessor platform. The log volume overhead by the update sequence number was negligible regardless of the slot size. The log processing time was measured with varying the abort ratio from 0% to 20%.

FIG. 11B shows the result when 1.2 M transactions are replayed in a 4-way multiprocessor platform. While the log volume of the private log buffering schemes decreased with the abort ratio, that of the public log buffering did not. Such difference in the log volume was reflected in the result. Note that PROL-SSN(4) and DL-private(4) outperform DL-public(4) by 1.44 times, ROL by 3.97 times.

In evaluating the overall recovery time, two types of measurement were conducted. The first one with the postfix *seq* measured the time for the parallel log processing separately from the time for the parallel backup database loading. The other one with the postfix *para* measured the recovery time when the log processing was intermixed with the backup loading.

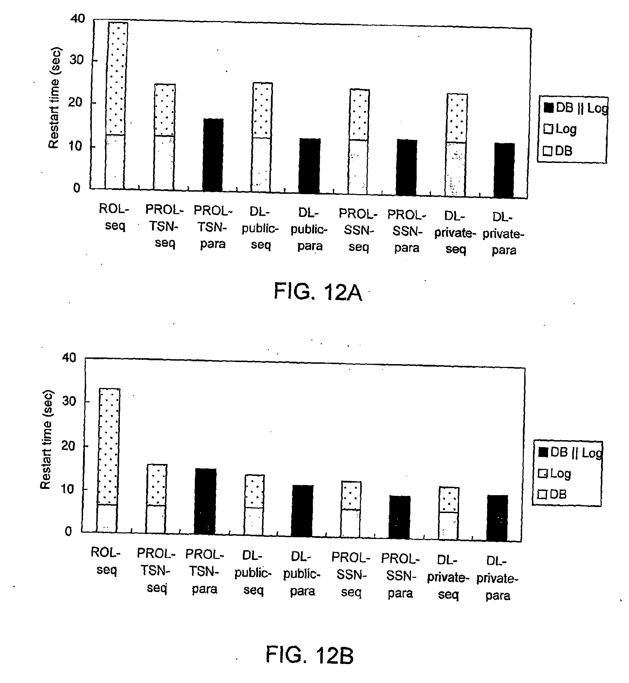

FIG. 12A and FIG 12B show the result when the log volume size was almost the same with the primary database size, namely 620~639 MB. FIG. 12A show the measured restart time with two log disks and two backup disks, and FIG. 12B shows the measured restart time with four log disks and four backup disks. The following observations are made.

- Intermixing the backup database loading and the log processing reduced the total recovery times of DL-public, DL-private, and PROL-SSN almost to half as shown in FIG. 12A.
- The total recovery time of PROL-TSN-*para* was longer than DL-public-*para*, DL-private-*para*, or PROL-SSN-*para* in both FIG. 12A and FIG. 12B. In PROL-TSN-*para*, since each backup loading process also accessed the restart hash table on TSN, the contention in the hash table increased.
- FIG. 12B shows that the gain in the restart time by intermixing the backup loading and the log processing was not so high as in FIG. 12A. The SCSI channel became saturated when the eight disks are fully involved in the restart.
- In FIG. 12B, the difference between DL-public-*para* and DL-private-*para* came from the difference in the log volume. Since the abort ratio was fixed at 5%, the log volume of DL-public was larger than that of DL-private by 5%.

- The marginal difference between PROL-SSN-*para* and DL-private-*para* came from the selective log replay of PROL. Since the backup database loading for the slot with already replayed log was skipped, the number of memory write operations was slightly smaller than that of DL variants.
- PROL-SSN-*para* outperformed ROL-*seq* by 2.83 times when two backup disks and two log disks were involved, and by 3.13 times when four backup disks and four log disks were involved.

In summary, the experimental results on a 4-way multiprocessor platform show that PROL-SSN and DL-private are almost indistinguishable in terms of the logging and recovery performance

While the invention has been described with reference to preferred embodiments, it is not intended to be limited to those embodiments. It will be appreciated by those of ordinary skilled in the art that many modifications can be made to the structure and form of the described embodiments without departing from the spirit and scope of this invention.

**Claims**

1. A method of logging a system having a database (100, 200) so that the system can recover the database (100, 200) in case of a system failure, wherein the database (100, 200) resides in main memory, wherein the system processes transactions where a transaction is a set of operations forming a logical unit in an application, the method comprising the steps of :

    generating log records, each representing update to the database (100, 200) by storing physical image (402) of the update portion;
    assigning an update sequence number representing the sequence of database updates to each log record;
    storing the generated log records into one or more log disks (109, 110, 204, 205, 505);
    checkpointing by storing a backup copy of the database (100, 200) into one or more backup disks (111, 112, 202, 203);
    reading log records, each having an update sequence number representing the sequence of database updates and a physical image (402) of the updated portion; and selectively replaying the log records based on the update sequence number;
    **characterized in that**
    the system maintains an active transaction table (ATT) (502) for storing active transactions, private log buffers (503) for storing redo and undo transactions, and public log buffers (504) for storing committed redo transactions;
    wherein the update sequence number is a slot sequence number (SSN) representing the sequence of updates to a given slot (412, 413) of the database (100, 200), and wherein the step of assigning an update sequence number further comprises the step of assigning a page version number (PVN) (415) that is increased by one when a page is formatted with a different slot size;
    wherein the step of generating log records comprises the steps of:

        generating redo log records and undo log records in a private log buffer (503);
        updating the slot (412, 413); and
        copying the update sequence number of the slot (412, 413) and the PVN (415) of the page into the redo log record and incrementing the update sequence number;

    wherein the method comprises the further step of
    reading page version numbers (PVN) (415) each of which was increased by one when a page is formatted with a different slot size; and
    wherein the step of selectively replaying further comprises the steps of:

        reading the position of a begin_checkpoint record from a log anchor (113, 210) and marking it as the beginning of the log record;
        initializing the ATT (502) from an active transaction list stored in the log anchor (113, 210);
        going backward in the log record from the end until the first commit record is encountered;
        marking the position as the end of the log record;
        from the marked log beginning to the marked log end going forward in the log, doing the step further comprising the following steps of:

            (A) for an updated log record,

(i) holding a latch on the page,

(ii) if the update record's PVN (405) is larger or equal to the page header's (411) PVN (415), proceeding to the next step, otherwise releasing the latch and ignoring the record;

(iii) if the update record's update sequence number (407) is larger than the current update sequence number (417, 418), updating the current update sequence number (417, 418) with the record's update sequence number (407), otherwise, ignoring the current update record;

(iv) releasing the latch;

(B) for a committed log record,

(i) removing a corresponding transaction ID (TID) from the ATT (502), if it exists;

(ii) waiting until the back loading completes; and

(iii) rolling back the remaining TIDs in the ATT (502).

2. The method of claim 1, the method comprising the further step of assigning a further update sequence number which is a global sequence number (GSN) stored in a global counter representing the sequence of updates to the entire database (100, 200).

3. The method of claim 2, wherein the step of assigning the update sequence number comprises the steps of:

acquiring a latch for the global counter;
increasing the counter by 1 and saving its the current value;
release the acquired latch;
and returning the saved counter value.

4. The method of claim 1, comprising the further step of assigning a further update sequence number which is a transaction sequence number (TSN) representing the sequence of transactions performed by the system.

5. The method of claim 1, further comprising the steps of:

partitioning the database (100, 200);
assigning an update sequence number representing the sequence of database up-dates to each log record for each database partition.

6. The method of claim 5, wherein the update sequence number is a global sequence number representing the sequence of updates to the entire database (100, 200).

7. The method of claim 5, wherein the update sequence number is a transaction sequence number representing the sequence of transactions performed by the system.

8. The method of claim 5, wherein the update sequence number is a slot sequence number representing the sequence of updates to a given slot (412, 413) of the database (100, 200).

9. The method of claim 1, wherein the step of generating log records further comprises the steps of:

generating the redo log records during a transaction by combining the headers and after images, and append them together with a transaction commit record;
flushing the private log buffer (503) to a corresponding public log buffer (504);
waiting until the redo log records are written to the disk;
releasing all the locks that the transaction holds;
notifying the user involved in the transaction that the transaction has been committed;
removing the matching element from the ATT (502); and
deleting the private log buffer (503) for the transaction.

10. The method of claim 9, wherein the step of generating log records further comprises the steps of:

applying the undo log record to the primary database (100, 200);
releasing all the locks that the transaction holds;

notifying the user that the transaction has been aborted;
removing the matching element from the ATT (502) in a latched state; and
deleting the private buffer (503) for the transaction.

**11.** The method of claim 1, comprising the steps of:

creating a begin_checkpoint record and appending it to all the public log buffers (504);
choosing the backup database that was the least recently checkpointed as the current backup database;
for each checkpointing partition in parallel, while scanning the database (100, 200) page by page, copying all dirty pages into the current backup database asynchronously, and waiting until all asycnchronous I/Os are completed;
for each transaction/log partition in parallel, holding a latch on the ATT (502), writing the undo logs of all the active transactions on the assigned disk (111, 112, 202, 203), and writing the active transaction list on the assigned disk (111, 112, 202, 203), and releasing the latch; and
appending an end_checkpoint record into all the public log buffers (504) and update log anchors (113, 210) with the current back up database ID and begin checkpointing the positions of log records.

**12.** The method of claim 1, wherein the selective replaying step comprises the step of:

replaying a log record if the update sequence number in the log record is larger than the most recently played update sequence number.

**13.** The method of claim 1, further comprising the step-of:

reading a backup copy of the database (100, 200) stored in one or more backup disks (111, 112, 202, 203) by checkpointing before said step of reading log records.

**14.** The method of claim 1, wherein the step of selectively replaying comprises the step of applying redo and undo operations using public log buffering.

**15.** The method of claim 1, wherein the step of selectively replaying comprises the step of applying redo operations only using private buffering.

**16.** The method of claim 1, wherein the step of selectively replaying further comprises the steps of:

finding the recently checkpointed backup database copy from the log anchor information;
reading the pages of the backup database into a backup database buffer; and for each page read in the backup database buffer,

A. holding a latch on the page;
B. if the buffered page's PVN is equal to larger the primary page header's PVN, proceeding to the next step, otherwise releasing the latch and skipping this page;
C. for each slot (412, 413) in the page,

(i) if the update sequence number is larger than the stored update sequence number, override the image (402) and the stored sequence number with the after image and the new update sequence number, respectively,
(iii) otherwise, ignoring the current update record; and

D. releasing the latch.

**17.** A system adapted to perform a method according to any of claims 1 to 16, the system having a database (100, 200) for recovering from a system failure, wherein the system processes transactions where a transaction is a set of operations forming a logical unit in an application, the system comprising:

main memory for storing the database (100, 200);
log manager (108) for logging updates to the database (100, 200) by generating log records;
checkpoint manager (107) for checkpointing;

one or more log disks (109, 110, 204, 205, 505) for storing log records representing update to the database (100, 200) by storing the physical image (402) of the update;

one or more backup disks (111, 112, 202, 203) for storing a copy of the main memory database (100, 200);

log anchor (113, 210) for keeping locations of backup databases and important log records;

a recovery manager (106) having a counter for storing an update sequence number for representing the sequence of database updates;

**characterized in that**

the database (100, 200) comprises a plurality of slots (412, 413);

wherein the system further comprises

an active transaction table (ATT) (502) for storing active transactions;

one or more private log buffers (503) for storing both redo and undo transaction log records;

one or more public log buffers (504) for storing committed redo transaction log records; and

wherein the update sequence number is a slot sequence number representing the sequence of updates to a given slot (412, 413) of the database (100, 200).

18. The system of claim 17, wherein the database (100, 200) comprises a plurality of fixed-size pages.

19. The system of claim 17, wherein the update sequence number is a global sequence number representing the sequence of updates to the entire database (100, 200).

20. The system of claim 17, wherein the update sequence number is a transaction sequence number representing the sequence of transactions created.

21. The system of claim 17, wherein the recovery manager (106) comprises:

a backup loader for loading the backup data from said one or more backup disks (111, 112, 202, 203) into the main memory database (100, 200); and

a log loader for loading the log from said one or more log disks (109, 110, 204, 205, 505) into the main memory database (100, 200) in order to restore the main memory database (100, 200) to the most recent consistent state.

22. The system of claim 17, wherein said log loader comprises:

a log reader for reading the log records from said one or more log disks (109, 110, 204, 205, 505); and

a log player for playing the log records to restore the main memory database (100, 200) to the latest consistent state.

23. A computer-readable storage medium that contains a program for logging up-dates in a system according to any of claims 17 to 22, the system further having a central processing unit (CPU), where the program under the control of a CPU performs the steps of a method according to any of claims 1 to 16.

24. The storage medium of claim 23, wherein the medium is a CD.

25. The storage medium of claim 23, wherein the medium is a magnetic disk.

26. The storage medium of claim 23, wherein the medium is a magnetic tape.

**Patentansprüche**

1. Verfahren zum Protokollieren bzw. Aufzeichnen eines Systems, welches eine Datenbank (100, 200) aufweist, so dass das System im Falle eines Systemfehlers die Datenbank (100, 200) wiederherstellen kann, wobei sich die Datenbank (100, 200) in einem Haupt- bzw. Arbeitsspeicher befindet, wobei das System Vorgänge abarbeitet, wo ein Vorgang ein Satz von Abläufen ist, welche eine logische Einheit in einer Anwendung bilden, wobei das Verfahren die Schritte umfasst:

Erstellen eines Protokollsatzes, wobei jeder eine Aktualisierung der Datenbank (100, 200) durch Speichern eines physischen Abbilds (402) des Aktualisierungsbereichs darstellt;

Zuordnen einer Aktualisierungs-Folgenummer, welche die Folge der Datenbank-Aktualisierungen zu jedem Protokollsatz darstellt,

Speichern der erstellten Protokollsätze auf einer oder mehreren Aufzeichungs-Discs (109, 110, 204, 205, 505);

Überprüfen durch Speichern einer Datensicherungskopie der Datenbank (100, 200) auf eine oder mehrere Datensicherungsdiscs (111, 112, 202, 203);

Lesen der Protokollsätze, wobei jeder eine Aktualisierungs-Folgenummer aufweist, welche die Folge von Datenbankaktualisierungen und ein physisches Abbild (402) des aktualisierten Bereichs darstellt; und

ausgewähltes Wiedergeben der Protokollsätze basierend auf der Aktualisierungs-Folgenummer;

**dadurch gekennzeichnet, dass**

das Systems eine aktive Vorgangstabelle bzw. -aufstellung (ATT) (502) zum Speichern aktiver Vorgänge, privater Aufzeichnungs-Zwischenspeicher (503) zur Speicherung von Redo- bzw. Wiederherstellungs- und Undo-bzw. Rücksetzvorgängen und öffentliche Aufzeichnungs-Zwischenspeicher (504) zur Speicherung von verpflichtendenden von verübten Redo-Vorgängen führt;

wobei die Aktualisierungs-Folgenummer eine Slot-Folgenummer (SSN) ist, welche die Folge der Aktualisierungen in einem gegebenen Slot (412, 413) der Datenbank (100, 200) darstellt, und wobei der Schritt des Zuordnens einer Aktualisierungs-Folgenummer ferner den Schritt eines Zuordnens einer Seiten-Versionsnummer (PVN) (415) umfasst, die um eins erhöht wird, wenn eine Seite mit einer anderen Slotgröße formatiert wird;

wobei der Schritt des Erstellens von Protokollsätzen die Schritte umfasst:

Erstellen von Redo-Protokollsätzen und Undo-Protokollsätzen in einem privaten Aufzeichnungs-Zwischenspeicher (503);

Aktualisieren des Slots (412, 413), und

Kopieren der Aktualisierungs-Folgenummer des Slots (412, 413) und der PVN (415) der Seite in den Redo-Protokollsatz und Erhöhen der Aktualisierungs-Folgenummer;

wobei das Verfahren ferner den Schritt umfasst:

Lesen der Seiten-Versionsnummern (PVN) (415), von denen jede um eins erhöht wurde, wenn eine Seite mit einer anderen Slotgröße formatiert wird; und

wobei der Schritt eines ausgewählten Wiedergebens ferner die Schritte umfasst:

Lesen der Position eines Anfangs_Prüfpunkt-Datensatzes aus einem Aufzeichnungsfestpunkt (113, 210) und Kennzeichnen dieser als den Anfang des Protokollsatzes;

Initialisieren der ATT (502) aus einer Liste aktiver Vorgänge, welche in dem Aufzeichnungsfestpunkt (113, 210) gespeichert ist;

in dem Protokollsatz zurückgehen von dem Ende bis die erste verübte Aufzeichnung gefunden wird;

Kennzeichnen der Position als das Ende des Protokollsatzes;

in dem Protokollsatz von dem **gekennzeichnet**en Aufzeichnungsanfang zu dem **gekennzeichnet**en Aufzeichnungsende vorwärts gehen,

Ausführen des Schritts, welcher ferner die folgenden Schritte umfasst:

(A) für einen aktualisierten Protokollsatz,

(i) Halten eines Riegels auf einer Seite,

(ii) wenn die Aktualisierungsaufzeichnungs PVN (405) größer oder gleich zu der PVN des Seitenkopfes (411) ist, mit dem nächsten Schritt fortfahren, ansonsten den Riegel auslösen und die Aufzeichnung ignorieren;

(iii) wenn die Aktualisierungs-Folgenummer (407) der Aktualisierungs-aufzeichnung größer als die aktuelle Aktualisierungs-Folgenummer (417, 418) ist, die aktuelle Aktualisierungs-Folgenummer (417, 418) mit der Aktualisierungs-Folgenummer (407) der Aufzeichnung aktualisieren; ansonsten die aktuelle Aktualisierungsaufzeichnung ignorieren;

(iv) Auslösen des Riegels;

(B) für einen verübten Protokollsatz,

(i) Entfernen einer entsprechenden Vorgangs-ID (TID) von der ATT (502), falls diese existiert;

(ii) Warten bis das Zurückladen abgeschlossen ist; und

(iii) Wiederholen des verbleibenden TID in der ATT (502).

**2.** Verfahren nach Anspruch 1, wobei das Verfahren den weiteren Schritt eines Zuweisens einer weiteren Aktualisierungs-Folgenummer umfasst, welche eine globale Folgenummer (GSN) ist, welche in einem globalen Zähler gespeichert ist, welcher die Folge von Aktualisierungen der gesamten Datenbank (100, 200) darstellt.

3. Verfahren nach Anspruch 2, wobei der Schritte eine Zuordnens der Aktualisierungs-Folgenummer die Schritte umfasst:

Akquirieren eines Riegels für den globalen Zähler;
Erhöhen des Zähler um eins und Speichern des aktuellen Werts;
Auslösen des akquirierten Riegels;
und Rückführen des gespeicherten Zählerwerts.

4. Verfahren nach Anspruch 1, welches den weiteren Schritt eine Zuweisens einer weiteren Aktualisierungs-Folgenummer umfasst, welche eine Vorgangs-Folgenummer (TSN) ist, welche die Folge von Vorgängen ist, welche von dem System ausgeführt werden.

5. Verfahren nach Anspruch 1, ferner die Schritte umfassend:

Aufteilen der Datenbank (100, 200);
Zuweisen einer Aktualisierungs-Folgenummer, welche die Folge von Datenbankaktualisierungen zu jedem Protokollsatz für jeden Datenbankteil darstellt

6. Verfahren nach Anspruch 5, wobei die Aktualisierungs-Folgenummer eine globale Folgenummer ist, welche die Folge von Aktualisierungen der gesamten Datenbank (100, 200) darstellt.

7. Verfahren nach Anspruch 5, wobei die Aktualisierungs-Folgenummer eine Vorgangs-Folgenummer ist, welche die Folge von Vorgängen, welche von dem System ausgeführt werden, darstellt.

8. Verfahren nach Anspruch 5, wobei die Aktualisierungs-Folgenummer eine Slot-Folgenummer ist, welche die Folge von Aktualisierungen für einen bestimmten Slot (412, 413) der Datenbank darstellt.

9. Verfahren nach Anspruch 1, wobei der Schritt eines Erstellens von Protokollsätzen ferner die Schritte umfasst:

Erstellen der Redo-Protokollsätze während eines Vorgangs durch Verbinden der Header bzw. Köpfe und nach Abbildungen und Anhängen dieser zusammen mit einem Vorgang-begehen-Aufzeichnung;
Leeren des privaten Aufzeichnungs-Zwischenspeichers (503) zu einem entsprechenden öffentlichen Aufzeichnungs-Zwischenspeicher (504);
Warten bis die Redo-Protokollsätze auf die Disc geschrieben werden;
Auslösen aller Riegel, die der Vorgang hält;
Benachrichtigen des Benutzers, der in den Vorgang eingebunden ist, dass der Vorgang verübt wurde;
Entfernen des übereinstimmenden Elements aus der ATT (502); und
Löschen des privaten Aufzeichnungs-Zwischenspeichers (503) für den Vorgang.

10. Verfahren nach Anspruch 9, wobei der Schritt eines Erstellens von Protokollsätzen ferner die Schritte umfasst:

Anwenden des Undo-Protokollsatzes in der ersten Datenbank (100, 200);
Auslösen aller Riegel, die der Vorgang hält;
Benachrichtigen des Benutzers, dass der Vorgang abgebrochen wurde;
Entfernen des übereinstimmenden Elements aus der ATT (502) in einem verriegelten Stadium; und
Löschen des privaten Zwischenspeichers (503) für den Vorgang.

11. Verfahren nach Anspruch 1, welches die Schritte umfasst:

Erzeugen einer Anfangs_Prüfpunkt-Aufzeichnung und Anhängen dieser an alle öffentlichen Aufzeichnungs-Zwischenspeicer (504);
Auswählen der Datensicherungs-Datenbank, welche die zuletzt Geprüfte ist als die aktuelle Datensicherungs-Datenbank;
für jeden parallel geprüften Teil, asynchrones Kopieren aller unreinen Seiten in die aktuelle Datensicherungs-Datenbank, während die Datenbank (100, 200) Seite für Seite gescannt wird, und Warten bis alle asynchronen I/Os abgeschlossen sind;
für jede(n) parallele(n) Teilvorgang/Teilaufzeichnung, halten eines Riegels auf die ATT (502), Schreiben der Undo-Aufzeichnungen aller aktiven Vorgänge auf die zugewiesene Disc (111, 112, 202, 203) und Schreiben der Liste aktiver Vorgänge auf die zugewiesene Disc (111, 112, 202, 203) und Auslösen des Riegels; und Anhängen einer End_Prüfpunkt-Aufzeichnung an alle öffentlichen Aufzeichnungs-Zwischenspeicher (504) und Aktualisieren der Aufzeichnungs-Festpurikte (113, 210) mit der aktuellen Datensicherungs-Datenbank ID und Beginnen mit dem Überprüfen der Positionen von Protokollsätzen.

12. Verfahren nach Anspruch 1, wobei der ausgewählte Wiedergabe-Schritt den Schritt umfasst:

Wiedergeben eines Protokollsatzes, wenn die Aktualisierungs-Folgenummer in dem Protokollsatz größer ist als die jüngst abgespielte Aktualisierungs-Folgenummer.

13. Verfahren nach Anspruch 1 ferner umfassend den Schritt:

Lesen einer Datensicherungs-Kopie der Datenbank (100, 200), welche auf einer oder mehreren Datensicherungskopie-Discs (111, 112, 202, 203) gespeichert ist, durch Überprüfen vor dem Schritt des Lesens von Protokollsätzen.

14. Verfahren nach Anspruch 1, wobei der Schritt eines ausgewählten Wiedergebens den Schritt eines Anwendens von Redo- und Undo-Abläufen unter Verwendung eines öffentlichen Aufzeichnungs-Zwischenspeichers umfasst.

15. Verfahren nach Anspruch 1, wobei der Schritt eines ausgewählten Wiedergebens den Schritt eines Anwendens von Redo-Abläufen ausschließlich unter Verwendung privater Zwischenspeicer umfasst.

16. Verfahren nach Anspruch 1, wobei der Schritt eines ausgewählten Wiedergebens ferner die Schritte umfasst:

Auffinden der jüngst geprüften Datensicherungs-Datenbankkopie aus den Aufzeichnungsfestpunkt-Informationen;
Einlesen der Seiten der Datensicherungs-Datenbank in einen Datensicherungs-Datenbank-Zwischenspeicer; und
für jede Seite, welche in dem Datensicherungs-Datenbank-Zwischenspeicher gelesen wird,

A. Halten einer Riegels auf der Seite;
B. wenn die PVN der zwischengespeicherten Seite gleich oder größer als die PVN des ersten Seitenkopfes ist, mit dem nächsten Schritt fortfahren, ansonsten den Riegel auslösen und diese Seite überspringen;
C. für jeden Slot (412, 413) auf dieser Seite,

(i) wenn die Aktualisierungs-Folgenummer größer ist als die gespeicherte Aktualiserungs-Folgenummer, entsprechend das Abbild (402) und die gespeicherte Folgenummer mit der Nachabbildung und der neuen Aktualisierungs-Folgenummer überspielen,
(iii) ansonsten, die aktuelle Aktualisierungs-Aufzeichnung ignorieren; und

D. Auslösen des Riegels.

17. System geeignet zum Ausführen eines Verfahrens gemäß einem der Ansprüche 1 bis 16, wobei das System eine Datenbank (100, 200) zur Wiederherstellung aufgrund eines Systemfehlers aufweist, wobei das System Vorgänge durchführt, wo ein Vorgang ein Satz von Abläufen ist, welcher eine logische Einheit in einer Anwendung bildet, wobei das System umfasst:

Arbeitsspeicher bzw. Hauptspeicher zum Speichern der Datenbank (100, 200);
Aufzeichnungs-Manager (108) zum Aufzeichnen bzw Protokollieren von Aktualisierungen der Datenbank (100, 200) durch Erstellen von Protokollsätzen;
Prüfpunkt-Manager (107) zur Überprüfung;
eine oder mehrere Aufzeichnungs-Discs (109, 110, 204, 205, 505) zum Speichern von Protokollsätzen, welche eine Aktualisierung der Datenbank (100, 200) darstellt durch Speichern des physischen Abbilds (402) der Aktualisierung;
eine oder mehrere Datensicherungs-Discs (111, 112, 202, 203) zum Speichern einer Kopie der Arbeitsspeicher-Datenbank (100, 200);
Aufzeichnungsfestpunkt (113, 210) zum Erhalten der Stellen bzw. Lagen von Datensicherungs-Datenbanken und wichtiger Protokollsätze;

ein Wiederherstellungs-Manager (106), welcher einen Zähler zum Speichern einer Aktualisierungs-Folgenummer zur Darstellung der Folge von DatenbankAktualisierungen aufweist;

**dadurch gekennzeichnet, dass**

die Datenbank (100, 200) eine Vielzahl von Slots (412, 413) umfasst;

wobei das System ferner umfasst

eine aktive Vorgangstabelle bzw. -aufstellung (ATT) (502) zur Speicherung von aktiven Vorgängen;

eine oder mehrere private Aufzeichnungs-Zwischenspeicer (503) zur Speicherung von sowohl Redo- als auch Undo-Vorgangs-Protokollsätzen;

eine oder mehrere öffentliche Aufzeichnungs-Zwischenspeicher (504) zur Speicherung von verübten Redo-Vorgang-Protokollsätzen; und

wobei die Aktualisierungs-Folgenummer eine Slot-Folgenummer ist, welche die Folge von Aktualisierungen in einem gegebenen Slot (412, 413) der Datenbank (100, 200) darstellt.

18. System nach Anspruch 17, wobei die Datenbank (100, 200) eine Vielzahl von Seiten fester Größe ist.

19. System nach Anspruch 17, wobei die Aktualisierungs-Folgenummer eine globale Folgenummer ist, welche die Folge von Aktualisierungen der gesamten Datenbank (100, 200) darstellt.

20. System nach Anspruch 17, wobei die Aktualisierungs-Folgenummer eine Vorgangs-Folgenummer ist, welche die Folge von erschaffenen Vorgängen darstellt.

21. System nach Anspruch 17, wobei der Wiederherstellungs-Manager (106) umfasst:

einen Datensicherungs-Lader zum Laden von Datensicherungs-Daten von den einen oder mehreren Sicherungskopie-Discs (111, 112, 202, 203) in die Arbeitsspeicher-Datenbank (100, 200); und

einen Aufzeichnungs-Lader zum Laden der Aufzeichnung von den einen oder mehreren Aufzeichnungsdiscs (109, 110, 204, 205, 505) in die Arbeitspeicher-Datenbank (100, 200), um die Arbeitspeicher-Datenbank (100, 200) in den aktuellsten folgerichtigen Zustand rückzuspeichern.

22. System nach Anspruch 17, wobei der Aufzeichnungs-Lader umfasst:

eine Aufzeichnungs-Leser zum Lesen der Protokollsätze von der/den einen oder mehreren Aufzeichnungsdiscs (109, 110, 204, 205, 505); und

einen Aufzeichungs-Abspieler zum Abspielen der Protokollsätze, um die Arbeitsspeicher-Datenbank (100, 200) in den letzt folgerichtigen Zustand rückzuspeichern.

23. Ein Computer lesbares Speichermedium, welches ein Programm zum Aufzeichnen bzw. Protokollieren von Aktualisierungen in einem System gemäß einem der Ansprüche 17 bis 22 enthält, wobei das System ferner eine zentrale Recheneinheit (CPU) aufweist, wo das Programm unter der Kontrolle einer CPU die Schritte eines Verfahrens nach einem der Ansprüche 1 bis 16 ausführt.

24. Speichermedium nach Anspruch 23, wobei das Medium eine CD ist.

25. Speichermedium nach Anspruch 23, wobei das Medium eine Magnetdiskette ist.

26. Speichermedium nach Anspruch 23, wobei das Medium ein Magnetband ist.

**Revendications**

1. Procédé d'accès à un système ayant une base de données (100, 200) de telle sorte que le système peut retrouver la base de données (100, 200) en cas d'un défaut du système, dans lequel la base de données (100, 200) réside dans une mémoire principale, dans lequel le système traite des transactions où une transaction est un set d'opérations qui forment une unité logique dans une application, le procédé comprenant les étapes suivantes :

la génération d'enregistrements de journal, chacun représentant une mise à jour vers la base de données (100, 200) par la mémorisation d'une image physique (402) de la partie de mise à jour ;

l'attribution d'un numéro de séquence de mise à jour qui représente la séquence des mises à jour de la base de données vers chaque enregistrement de journal ;

la mémorisation des enregistrements de journal générés jusque dans un ou plusieurs disque(s) de journal (109, 110, 204, 205, 505) ;

l'établissement des points de contrôle par la mémorisation d'une copie de sauvegarde de la base de données (100, 200) jusque dans un ou plusieurs disque(s) de sauvegarde (111,112,202,203);

la lecture d'enregistrements de journal, ayant chacun un numéro de séquence de mise à jour qui représente la séquence des mises à jour de la base de données et une image physique (402) de la partie de mise à jour ;

et la nouvelle reproduction sélective des enregistrements de journal sur la base du numéro de séquence de mise à jour ;

**caractérisé en ce que**

le système maintient un tableau de transactions actives (Active Transaction Table (ATT)) (502) pour la mémorisation des transactions actives, des tampons de journal privé (503) pour la mémorisation des transactions du type « redo » et du type « undo », et des tampons de journal public (504) pour la mémorisation des transactions commises du type « redo » ;

dans lequel le numéro de séquence de mise à jour est un numéro de séquence de zone d'entrée (Slot Sequence Number (SSN)) qui représente la séquence des mises à jour vers une zone d'entrée donnée (412, 413) de la base de données (100, 200), et dans lequel l'étape consistant à attribuer un numéro de séquence de mise à jour comprend l'étape consistant à attribuer un numéro de version de page (Page Version Number (PVN)) (415) qui est augmenté de « un » lorsqu'une page est formatée avec une dimension de zone d'entrée différente ;

dans lequel l'étape consistant à générer des enregistrements de journal comprend les étapes suivantes :

la génération d'enregistrements de journal du type « redo » et d'enregistrements de journal du type « undo » dans un tampon de journal privé (503) ;

la mise à jour de la zone d'entrée (412, 413) ; et

la copie du numéro de séquence de mise à jour de la zone d'entrée (412, 413) et du PVN (415) de la page jusque dans l'enregistrement de journal du type « redo » et l'incrémentation du numéro de séquence de mise à jour ;

dans lequel le procédé comprend l'étape supplémentaire consistant à

lire les numéros de version de page (PVN) (415), chacun d'entre eux étant augmenté de « un » lorsqu'une page est formatée avec une dimension de zone d'entrée différente ; et

dans lequel l'étape de la nouvelle reproduction sélective comprend en outre les étapes suivantes :

la lecture de la position d'un enregistrement de point de contrôle de départ depuis un lien hypertexte de journal (113, 210) et le marquage de celui-ci comme étant le départ de l'enregistrement de journal ;

l'initialisation de l'ATT (502) depuis une liste des transactions actives mémorisée dans le lien hypertexte de journal (113, 210) ;

le déplacement vers l'arrière dans l'enregistrement de journal depuis la fin jusqu'à ce que le premier enregistrement à commettre soit rencontré ;

le marquage de la position comme étant la fin de l'enregistrement de journal ;

en commençant depuis le journal marqué vers la fin du journal marqué, le déplacement vers l'avant dans le journal, tout en effectuant l'étape qui comprend en outre les étapes suivantes :

(A) pour un enregistrement de journal mis à jour :

(i) le maintien d'un verrouillage sur la page,

(ii) si le (PVN) (405) de l'enregistrement de mise à jour est plus grand ou égal au (PVN) (415) de l'en-tête de page, la continuation avec la prochaine étape, dans le cas contraire la libération du verrouillage et le fait d'ignorer l'enregistrement ;

(iii) si le numéro de séquence de mise à jour (407) de l'enregistrement de mise à jour est plus grand que le numéro actuel de séquence de mise à jour (417, 418), la mise à jour du numéro actuel de séquence de mise à jour (417, 418) avec le numéro de séquence de mise à jour (407) de l'enregistrement de mise à jour, dans le cas contraire le fait d'ignorer l'enregistrement actuel de mise à jour ;

(iv) la libération du verrouillage ;

(B) pour un enregistrement de journal commis :

**EP 1 407 359 B1**

(i) la suppression d'une ID de transaction correspondante (TID) depuis l'ATT (502) si elle existe ;
(ii) l'attente jusqu'à ce que le rétro chargement soit achevé ; et
(iii) la réduction des TID restantes dans l'ATT (502).

2. Procédé selon la revendication 1, le procédé comprenant l'étape supplémentaire consistant à attribuer un numéro supplémentaire de séquence de mise à jour qui est un numéro de séquence global (Global Sequence Number (GSN)) mémorisé dans un compteur global qui représente la séquence des mises à jour de la base de données entière (100, 200).

3. Procédé selon la revendication 2, dans lequel l'étape consistant à attribuer le numéro de séquence de mise à jour comprend les étapes suivantes :

l'acquisition d'un verrouillage pour le compteur global ;
l'augmentation du compteur de « un » et la sauvegarde de sa valeur actuelle ;
la libération du verrouillage acquis ;
et le retour à la valeur de compteur sauvegardée.

4. Procédé selon la revendication 1, comprenant l'étape supplémentaire consistant à attribuer un numéro supplémentaire de séquence de mise à jour qui est un numéro de séquence de transaction (Transction Sequence Number (TSN)) qui représente la séquence des transactions accomplies par le système.

5. Procédé selon la revendication 1, comprenant en outre les étapes suivantes : le partitionnement de la base de données (100, 200) ;
l'attribution d'un numéro de séquence de mise à jour qui représente la séquence des mises à jour de la base de données vers chaque enregistrement de journal pour chaque partition de la base de donnée.

6. Procédé selon la revendication 5, dans lequel le numéro de séquence de mise à jour est un numéro de séquence global qui représente la séquence des mises à jour de la base de données entière (100, 200).

7. Procédé selon la revendication 5, dans lequel le numéro de séquence de mise à jour est un numéro de séquence de transaction qui représente la séquence des transactions accomplies par le système

8. Procédé selon la revendication 5, dans lequel le numéro de séquence de mise à jour est un numéro de séquence de zone d'entrée qui représente la séquence des mises à jour vers une zone d'entrée donnée (412, 413) de la base de données (100, 200).

9. Procédé selon la revendication 1, dans lequel l'étape consistant à générer des enregistrements de journal comprend les étapes suivantes :

la génération d'enregistrements de journal du type « redo » pendant une transaction par la combinaison des en-têtes et après des images, et leur ajout conjointement à un enregistrement pour commettre une transaction ;
la purge du tampon de journal privé (503) vers un tampon correspondant de journal public (504) ;
l'attente jusqu'à ce que les enregistrements de journal du type « redo » aient été écrits sur le disque ;
la libération de tous les verrouillages que la transaction maintient ;
la notification de la part de l'utilisateur impliqué dans la transaction que la transaction a été accomplie ;
la suppression de l'élément conjugué depuis l'ATT (502) ; et
l'effacement du tampon de journal privé (503) pour la transaction.

10. Procédé selon la revendication 9, dans lequel l'étape consistant à générer des enregistrements de journal comprend en outre les étapes suivantes :

l'application de l'enregistrement de journal du type « redo » vers la base de données primaire (100, 200);
la libération de tous les verrouillages que la transaction maintient ;
la notification de la part de l'utilisateur impliqué dans la transaction que la transaction a été abandonnée ;
la suppression de l'élément conjugué depuis l'ATT (502) dans un état verrouillé ; et l'effacement du tampon de journal privé (503) pour la transaction.

11. Procédé selon la revendication 1, comprenant les étapes suivantes :

23

la création d'un enregistrement de point de contrôle de départ et son ajout à tous les tampons de journal public (504) ;

le choix de la base de données de sauvegarde qui a été récemment soumise le moins à l'établissement de points de contrôle en tant que la base de données actuelle ;

pour chaque partition d'établissement de points de contrôle en parallèle, pendant le scanning de la base de données (100, 200) page par page, la copie de toutes les pages infectées jusque dans la base de données actuelle de sauvegarde de manière asynchrone, et l'attente jusqu'à ce que toutes les entrées/sorties asynchrones aient été achevées ;

pour chaque partition de transaction/journal en parallèle, le maintien d'un verrouillage sur l'ATT (502), l'écriture des journaux du type « undo » de toutes les transactions actives sur le disque attribué (111, 112, 202, 203) et l'écriture de la liste des transactions actives sur le disque attribué (111, 112, 202, 203), et la libération du verrouillage ; et

l'ajout d'un enregistrement de point de contrôle final jusque dans tous les tampons de journal public (504) et la mise à jour des liens hypertextes de journal (113, 210) avec l'ID de la base de données actuelle de sauvegarde et le début de l'établissement de points de contrôle sur les positions des enregistrements de journal.

**12.** Procédé selon la revendication 1, dans lequel l'étape de la nouvelle reproduction sélective comprend les étapes suivantes :

la nouvelle reproduction d'un enregistrement de journal si le numéro de séquence de mise à jour dans l'enregistrement de journal est plus grand que le numéro de séquence de mise à jour reproduit le plus récemment.

**13.** Procédé selon la revendication 1, comprenant en outre l'étape suivante :

la lecture d'une copie de sauvegarde de la base de données (100, 200) mémorisée sur un disque ou sur plusieurs disques (111, 112, 202, 203) par l'établissement de points de contrôle avant ladite étape de lecture des enregistrements de journal.

**14.** Procédé selon la revendication 1, dans lequel l'étape de la nouvelle reproduction sélective comprend l'étape consistant à appliquer des opérations du type « redo » et du type « undo » qui utilisent la mise en tampon du journal public.

**15.** Procédé selon la revendication 1, dans lequel l'étape de la nouvelle reproduction sélective comprend l'étape consistant à appliquer des opérations du type « redo » qui utilisent seulement la mise en tampon du journal privé.

**16.** Procédé selon la revendication 1, dans lequel l'étape de la nouvelle reproduction sélective comprend en outre les étapes suivantes :

la localisation de la copie de la base de données de sauvegarde soumise récemment à l'établissement de points de contrôle depuis l'information du lien hypertexte de journal ;

la lecture des pages de la base de données de sauvegarde jusque dans un tampon de base de données de sauvegarde ; et pour chaque page lue dans le tampon de base de données de sauvegarde,

A. le maintien d'un verrouillage sur la page ;

B. si le PVN de la page mise en tampon est entre égal à et plus grand que le PVN de l'en-tête de page primaire, le fait de procéder à la prochaine étape, dans le cas contraire, la libération du verrouillage et le saut de cette page ;

C. pour chaque zone d'entrée (412, 413) dans la page,

(i) si le numéro de séquence de mise à jour est plus grand que le numéro de séquence de mise à jour mémorisé, la substitution de l'image (402) et du numéro de séquence mémorisé respectivement par l'image subséquente et par le nouveau numéro de séquence de mise à jour,

(iii) dans le cas contraire, le fait d'ignorer l'enregistrement actuel de mise à jour ; et

D. la libération du verrouillage.

**17.** Système adapté pour accomplir un procédé conformément à l'une quelconque des revendications 1 à 16, le système ayant une base de données (100, 200) pour la récupération suite à un défaut du système, dans lequel le système traite des transactions où une transaction est un set d'opérations qui forment une unité logique dans une application, le système comprenant les composants suivants :

une mémoire principale pour la mémorisation de la base de données (100, 200) ;

un gestionnaire de journal (108) pour l'accès à des mises à jour vers la base de données (100, 200) par la génération d'enregistrements de journal ;

un gestionnaire de points de contrôle (107) pour l'établissement des points de contrôle ;

un ou plusieurs disque(s) de journal (109, 110, 204, 205, 505) pour la mémorisation des enregistrements de journal qui représentent la mise à jour vers la base de données (100, 200) par la mémorisation d'une image physique (402) de la mise à jour ;

un ou plusieurs disque(s) de sauvegarde (111, 112, 202, 203) pour la mémorisation d'une copie de la base de données à mémoire principale (100, 200) ;

un lien hypertexte de journal (113, 210) pour conserver des emplacements des bases de données de sauvegarde et des enregistrements de journal importants ;

un gestionnaire de récupération (106) qui a un compteur pour mémoriser un numéro de séquence de mise à jour afin de représenter la séquence des mises à jour de la base de données ;

**caractérisé en ce que**

la base de données (100, 200) comprend une pluralité de zones d'entrée (412, 413) ; dans lequel le système comprend en outre :

un tableau de transactions actives (ATT) (502) pour la mémorisation des transactions actives ;

un ou plusieurs tampon(s) de journal privé (503) pour la mémorisation à la fois des transactions du type « redo » et du type « undo »,

un ou plusieurs tampon(s) de journal public (504) pour la mémorisation des enregistrements de journal sur les transactions commises du type « redo » ; et

dans lequel le numéro de séquence de mise à jour est un numéro de séquence de zone d'entrée qui représente la séquence des mises à jour vers une zone d'entrée donnée (412, 413) de la base de données (100, 200).

**18.** Système selon la revendication 17, dans lequel la base de données (100, 200) comprend une pluralité de pages à dimension fixe.

**19.** Système selon la revendication 17, dans lequel le numéro de séquence de mise à jour est un numéro de séquence global qui représente la séquence des mises à jour de la base de données entière (100, 200).

**20.** Système selon la revendication 17, dans lequel le numéro de séquence de mise à jour est un numéro de transaction qui représente la séquence des transactions créées.

**21.** Système selon la revendication 17, dans lequel le gestionnaire de récupération (106) comprend :

un programme de chargement de sauvegarde pour charger les données de sauvegarde depuis ledit un ou depuis lesdits plusieurs disque(s) de sauvegarde (111, 112, 202, 203) jusque dans la base de données à mémoire principale (100, 200) ; et

un programme de chargement de journal pour charger le journal depuis ledit un ou depuis lesdits plusieurs disque(s) de journal (109, 110, 204, 205, 505) jusque dans la base de données à mémoire principale (100, 200) afin de restaurer la base de données à mémoire principale (100, 200) sur l'état consistent le plus récent.

**22.** Système selon la revendication 17, dans lequel ledit programme de chargement comprend :

un programme de lecture de journal pour lire les enregistrements de journal depuis ledit un ou depuis lesdits plusieurs disque(s) de journal (109, 110, 204, 205, 505) ; et

un programme de reproduction de journal pour reproduire les enregistrements de journal afin de restaurer la base de données à mémoire principale (100, 200) sur le tout dernier état consistent.

**23.** Support de mémorisation lisible par un ordinateur, lequel contient un programme pour accéder aux mises à jour dans un système conformément à l'une quelconque des revendications 17 à 22, le système ayant en outre une unité de traitement centrale (central processing unit (CPU)), dans lequel le programme accomplit, sous la commande d'une CPU, les étapes d'un procédé conformément à l'une quelconque des revendications 1 à 16.

**24.** Support de mémorisation selon la revendication 23, dans le quel le support est un CD.

**25.** Support de mémorisation selon la revendication 23, dans le quel le support est un disque magnétique.

**26.** Support de mémorisation selon la revendication 23, dans le quel le support est une bande magnétique.

FIG. 1

EP 1 407 359 B1

FIG. 2

EP 1 407 359 B1

Memory Address Space

L1

L2

$sn(L1) < sn(L2)$

FIG. 3

EP 1 407 359 B1

EP 1 407 359 B1

| Type | Size | PVN | Slot ID | SSN | Physical Image of a Slot |
|------|------|-----|---------|-----|--------------------------|

403 404 405 406 407 402

401

**FIG. 4A**

411

| | PVN | | Slot 1 | SSN 1 | | Slot n | SSN n |
|---|-----|---|--------|-------|---|--------|-------|

414 415 416 412 417 413 418

**FIG. 4B**

FIG. 5

FIG. 6

Master Server — 601
Slave Server — 602
Monitor Thread — 603
Monitor Thread — 604
Heartbeat Message — 605
Log

FIG. 7

DL-private(4)

PROL-SSN(4)

PROL-TSN(4)

DL-public(4)

ROL

TPS

200K
150K
100K
50K
0K

0    5    10    15    20

Abort ratio (%)

FIG. 8B

TPS

350K
300K
250K
200K
150K
100K
50K
0K

0    256    512    768    1024

Slot size (bytes)

FIG. 8A

FIG. 9

EP 1 407 359 B1

FIG. 10

FIG. 11B

FIG. 11A

FIG. 12A

FIG. 12B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Juchang Lee ; Kihong Kim ; Sang K. Cha.** Differential Logging: A Commutative and Associative Logging Scheme for Highly Parallel Main Memory Database. *Proceedings of ICDE Conference,* 2001, 173-182